Europäisches Patentamt

European Patent Office

Office européen des brevets

(19)

(11) Veröffentlichungsnummer: **0 073 359**
**B1**

(12) **EUROPÄISCHE PATENTSCHRIFT**

(45) Veröffentlichungstag der Patentschrift:
04.12.85

(21) Anmeldenummer: 82107062.0

(22) Anmeldetag: 04.08.82

(51) Int. Cl.⁴: **A 01 D 75/18, A 01 D 34/64**

(54) Verriegelungsvorrichtung für Mähmaschinen.

(30) Priorität: 31.08.81 DE 3134389

(43) Veröffentlichungstag der Anmeldung:
09.03.83 Patentblatt 83/10

(45) Bekanntmachung des Hinweises auf die Patenterteilung:
04.12.85 Patentblatt 85/49

(84) Benannte Vertragsstaaten:
AT BE CH DE FR GB LI NL

(56) Entgegenhaltungen:
DE - A - 1 457 994
GB - A - 2 022 382

(73) Patentinhaber: Klöckner-Humboldt-Deutz AG
Zweigniederlassung Fahr, D-7702 Gottmadingen (DE)

(72) Erfinder: Maier, Martin, Hilzingerstrasse 23,
D-7702 Gottmadingen (DE)
Erfinder: Ruprecht, Hermann,
Johann-Sebastian-Bach-Strasse 14, D-7700 Singen (DE)

(74) Vertreter: Haft, Berngruber, Czybulka,
Hans-Sachs-Strasse 5, D-8000 München 5 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft eine Mähmaschine mit einem Mähwerkbalken, der mindestens ein rotierendes Mähwerkzeug an seiner Unterseite trägt und mit einem verschwenkbar angeordneten Tragbalken, der in Fahrtrichtung der Mähmaschine gesehen und in ihrer Arbeitsstellung vor dem Mähwerkbalken angeordnet ist und mit einer Verriegelungsvorrichtung, die eine Feder und einen durch diese Feder beaufschlagten Riegel aufweist.

Derartige Mähmaschinen, bei denen sich in Arbeitsstellung der Tragbalken und der Mähwerkbalken im allgemeinen senkrecht zur Fahrtrichtung der Maschine erstrecken, sind allgemein bekannt. Da die Mähmaschinen die Maximalbreite des Schleppers erheblich überragen, müssen sie zum Transport in ihre Transportstellung geschwenkt werden, was meistens durch waagerechtes Verschwenken um eine hinter dem Schlepper angeordnete vertikale Schwenkachse geschieht. Nach dem Verschwenken in ihre Arbeitsstellung müssen die Mähmaschinen arretiert werden, da sie sonst frei zwischen ihrer Arbeits- und ihrer Transportstellung hin- und herschwenken würden.

Stößt nun die Mähmaschine in ihrer Arbeitsstellung auf ein Hindernis, so muß die Mähmaschine um schwerwiegende Beschädigungen zu vermeiden, in Richtung zu ihrer Transportstellung verschwenkt werden können. Zu diesem Zweck ist es bereits aus der europäischen Patentanmeldung 0 022 283 bekannt, die Mähwerkzeuge an einem Balken zu befestigen, der um eine aufwärts gerichtete Schwenkwelle derart verschwenkbar ist, daß beim Auftreffen auf ein Hindernis der die Mähwerkzeuge tragende Balken entgegen der Wirkung eines Federmechanismus nach vorne verschwenkt werden kann.

Bei dieser bekannten Mähmaschine ist am Ende des Tragbalkens eine Stütze befestigt, mit der durch eine vertikale Welle ein Kupplungsorgan gekuppelt ist, mit dessen Hilfe ein zweiter Gestellteil um eine vertikale Welle verschwenkbar mit dem ersten Gestellteil gekuppelt ist. Die beiden Gestellteile werden mit Hilfe eines federbelasteten Verriegelungsmechanismus vor Verdrehung um die Welle gehalten, wobei dieser Verriegelungsmechanismus derart ausgebildet ist, daß, wenn im Betrieb auf den zweiten Gestellteil eine bestimmte Kraft entgegen der Fahrtrichtung ausgeübt wird, der eine Gestellteil nach dem Überwinden der vom Verriegelungsmechanismus ausgeübten Verriegelungskraft um die Welle rückwärts verschwenkt werden kann.

Bei einer derartigen geringen Schwenkbewegung eines Teils der Mähmaschine muß jedoch nach dem Auftreffen auf ein Hindernis sofort angehalten werden, aufgrund der geringen Ausweichwege, da sonst eine Beschädigung des Tragbalkens erfolgt. Des weiteren muß bei dieser bekannten Ausführungsform der Schlepper mitsamt der angelenkten Mähmaschine nach rückwärts bewegt werden, um vom Hindernis freizukommen, welches anschließend umfahren werden muß.

Aus der GB-A-2 022 382 ist ferner eine Mähmaschine bekannt, bei der der Mähwerkbalken aufklappbar ist. Diese Mähmaschine ist ferner mit einer Verriegelungsvorrichtung versehen, die ein Verschwenken des Mähwerkbalkens um eine vertikal gerichtete Achse gegenüber dem Tragbalken ermöglicht. Ein federbelasteter Bolzen des Mähwerkbalkens, dessen Ende etwa kegelstumpfförmig abgedreht ist greift in eine entsprechende Ausnehmung einer Platte des Tragbalkens ein. Bei dieser bekannten Mähmaschine tritt aber noch der Nachteil auf, daß das Mähwerk bei Auflaufen auf ein Hindernis erst dann — und zwar schlagartig — freigegeben wird, wenn eine bestimmte Grenzkraft erreicht bzw. überschritten wird. Gerade das schlagartige Freigeben des Mähwerks kann aber zu erheblichen Beschädigungen in der Aufhängung am Schlepper führen.

Aus der DE-A-1 457 994 ist eine Entlastungsvorrichtung bei Überbeanspruchung von landwirtschaftlichen Erntemaschinen bekannt, bei der eine Schraubendruckfeder in einem zylindrischen Körper teleskopisch aufgenommen ist und wobei Mittel vorgesehen sind, die beim Auftreffen auf einen geringen Widerstand federnd nachgeben und ferner Mittel vorgesehen sind um beim Auftreffen auf einen großen Widerstand die Entlastungsvorrichtung ausklinken zu lassen und somit ein Ausweichen des Gerätes ermöglichen.

Auch hierbei tritt also noch der Nachteil auf, daß die Erntemaschine beim Auflaufen auf ein Hindernis schlagartig freigegeben wird, sofern eine bestimmte Auftreffkraft überschritten wird.

Aufgabe der vorliegenden Erfindung ist es, eine Mähmaschine zu schaffen, die unter Vermeidung der obenbenannten Nachteile die Unfallgefahr herabsetzt, eine Beschädigung der Maschine beim Auftreffen auf ein Hindernis mit Sicherheit vermeidet sowie einfach und wirkungsvoll im Aufbau ist.

Ausgehend von einer Mähmaschine der eingangs näher genannten Art erfolgt die Lösung dieser Aufgabe mit den im kennzeichnenden Teil des Anspruchs 1 angegebenen Merkmalen. Vorteilhafte Ausgestaltungen sind in den Unteransprüchen beschrieben.

Erfindungsgemäß wird also das am Tragbalken durch die vorgespannte Feder gehaltene bewegliche Rastglied beim Verschwenken der Mähmaschine in die Arbeitsstellung automatisch in die Fangtasche geschoben, wobei der Riegel ebenfalls automatisch einrastet. Da der Riegel mit einem Seilzug verbunden ist, kann die Vorrichtung vom Fahrer entriegelt werden, ohne daß dieser seinen Sitz auf dem Schlepper verläßt.

Die Vorspannkraft der Feder des Federelementes, die auf das Rastglied wirkt, wird so groß gewählt, daß die Mähmaschine unter normalen Bedingungen eingesetzt werden kann, ohne daß sie ihre Arbeitsstellung verändert. Beim Auftreffen auf ein Hindernis kann nun das Mähwerk um einen bestimmten Weg zurückschwenken, wobei die Spannkraft der Feder ansteigt. Handelt es sich um ein kleines Hindernis, wie es meistens der Fall ist, so wird das Mähwerk durch die Federkraft nach Überwindung dieses Hindernisses automatisch wieder in die normale Arbeitsstellung zurückgeschwenkt, so daß keine Unterbrechung der Mäharbeit erfolgt.

Handelt es sich hingegen um ein größeres Hindernis, das nicht durch das Mähwerk selbst überwunden werden kann, so entriegelt der Fahrer durch kurzes Betätigen des Zugseils und des Riegels die Verriegelungsanordnung und die Mähmaschine kann bis in ihre Transportstellung zurückgestellt werden. Beim danach erfolgenden Zurückschwenken in die Arbeitsstellung erfolgt, wie oben beschrieben, die automatische Verriegelung.

Die erfindungsgemäße Mähmaschine weist den Vorteil auf, daß durch das gefederte Rastglied die Maschine im Normalbetrieb schonender behandelt wird als bisher üblich. Gleichzeitig erfolgt eine Dämpfung der Beschleunigungsstöße in Fahrtrichtung und bei jedem Rangiermanöver, wodurch die Lebensdauer der Maschine weiterhin erhöht wird.

Im folgenden wird die Erfindung anhand der Zeichnung näher erläutert, in der vorteilhafte Ausführungsbeispiele dargestellt sind. Es zeigt

Fig. 1 eine Seitenansicht einer Mähmaschine in ihrer Arbeitsstellung,

Fig. 2 eine Draufsicht auf die Mähmaschine in ihrer Arbeitsstellung,

Fig. 3 eine vergrößerte Darstellung der erfindungsgemäßen Verriegelungsvorrichtung,

Fig. 4 und 5 zwei weitere Einzelheiten der Verriegelungsvorrichtung,

Fig. 6 ein anderes Ausführungsbeispiel in Seitenansicht,

Fig. 7 dieses Ausführungsbeispiel in Draufsicht, und

Fig. 8 ein weiteres erfindungsgemäßes Ausführungsbeispiel.

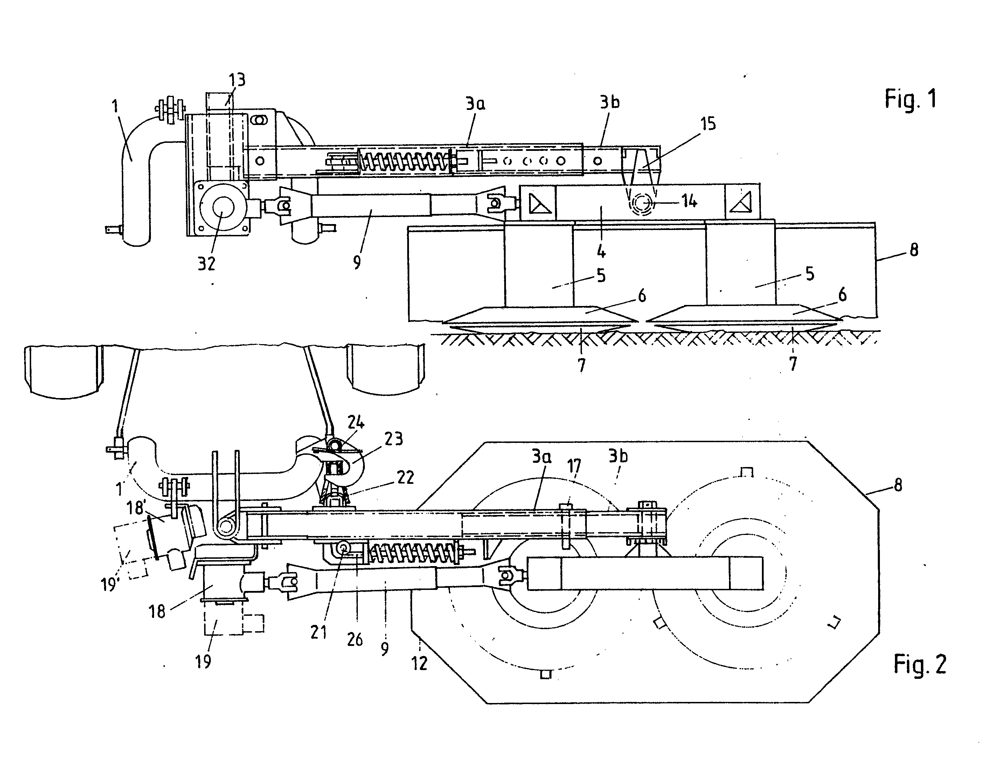

Bei den in den Fig. 1 und 2 dargestellten Mähmaschinen ist mit 1 der Anbaubock zum Anschluß an einem nicht näher gezeigten Schlepper bezeichnet, an dem eine vertikale Schwenkachse 13 befestigt ist. Um diese Schwenkachse ist ein Tragbalken drehbar gelagert, der aus zwei z. B. ineinander gesteckten und verschiebbar angeordneten Teilen 3a und 3b besteht. Die Teile 3a und 3b können mittels eines Bolzens 17 arretiert werden. Mit 4 ist ein Mähwerkbalken bezeichnet, der, in Fahrtrichtung der Maschine in ihrer Arbeitsstellung gesehen, hinter und unterhalb des Tragbalkens angeordnet ist. Der Mähwerkbalken 4 ist über eine Traglasche 15 derart mit dem äußeren Teil 3b des Tragbalkens verbunden, daß der Drehpunkt 14 für die Pendelbewegung des Mähwerkbalkens innerhalb dieses Balkens liegt.

Am Mähwerkbalken 4 sind in herkömmlicher Art und Weise einige Mähwerkzeuge angeordnet, von denen zwei dargestellt sind. Mit 5 ist dabei eine Trommel bezeichnet, mit 6 zwei gegenläufig rotierende Schneidteller, die mit Messern versehen sind und mit 7 zwei Gleitteller. Die Schneidteller werden dabei in bekannter Art und Weise von einer Gelenkwelle 9 angetrieben und zwar über ein Winkelgetriebe 32, das mit der Zapfwelle des Schleppers über einen Anschluß 18 verbunden ist. In Fig. 2 ist der Kraftanschluß 18 in Arbeitsstellung dargestellt, sowie in Transportstellung und dort mit 18' bezeichnet. 19 stellt einen zweiten Kraftanschluß dar, dessen Transportstellung mit 19' bezeichnet ist, z. B. für den Anschluß einer Aufbereitungsvorrichtung.

Die erfindungsgemäße Verriegelungsvorrichtung weist nun, wie in den Fig. 1 bis 7 dargestellt, ein parallel zum Tragbalken 3a angeordnetes Federelement auf, das z. B. aus einer Spiralfeder 12 besteht, die in einer Buchse angeordnet ist und innerhalb derer eine Gleitstange 25 enthalten ist, die in eine gelenkige Kette 26 übergeht. Diese wird über eine Umlenkrolle 21 umgelenkt und durchsetzt den Tragbalken 3a in einer Öffnung 27 und verläuft bis zu einer Buchse 28, an der sie befestigt ist. Die Gleitstange 25 ist mittels einer Mutter 20 an der die Spiralfeder 12 umgebenden Buchse befestigt. Auf der dem Federelement gegenüberliegenden Seite des Tragbalkens 3a ist nun eine Fangtasche 22 vorgesehen mit einer konischen Öffnung, in die ein Rastglied 31 mit einer Öffnung eingreifen kann. Die Fangtasche 22 ist mit zwei sich gegenüberliegenden Öffnungen 30 versehen, in die ein am Anbaubock 1 drehbar angeordneter unter der Wirkung einer Feder 24 stehender Riegel 23 derart eingreifen kann, daß er die Öffnung im Rastglied 31 durchsetzt und dieses dergestalt verriegelt. Dies erfolgt automatisch sobald die Mähmaschine in ihre Arbeitsstellung geschwenkt worden ist.

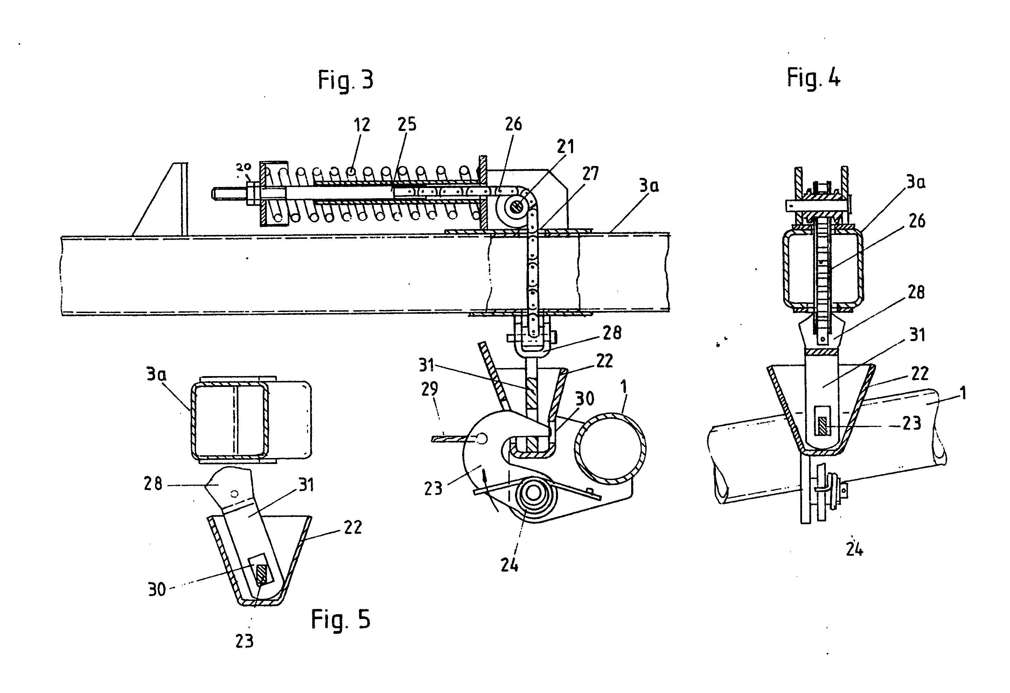

Die Fig. 3, 4 und 5 zeigen Einzelheiten der erfindungsgemäßen Verriegelungsvorrichtung in vergrößertem Maßstab. Es wird nun deutlich, daß, sobald die Mähmaschine an ein Hindernis stößt, der Mähwerkbalken 3a gegen die Wirkung der Kraft der Feder 12 um ein bestimmtes Stück zurückschwenken kann, wobei die Feder komprimiert wird und die Kette 26 über die Rolle 21 abläuft. Wird das Hindernis überwunden, so wird der Tragbalken 3a durch die Kraft der Feder 12 automatisch wieder in die normale Arbeitsstellung zurückgeschwenkt. Eine Unterbrechung der Mäharbeiten ist dabei nicht erforderlich.

Sofern das Hindernis jedoch größer ist, oder die Mähmaschine in ihre Transportstellung geschwenkt werden soll, zieht der Fahrer von seinem Arbeitsplatz auf dem Traktor aus das Zugseil 29, das am Riegel 23 befestigt ist. Dadurch wird, ohne daß der Fahrer seinen Platz verläßt, der Riegel 23 aus den Öffnungen 30 der Fangtasche 22 sowie der Öffnung im beweglichen Rastglied 31 entfernt, so daß die Mähmaschine bis in ihre Transportstellung geschwenkt werden kann, wobei dieses Zurückschwenken ebenfalls gegen die Wirkung der Feder 12 erfolgt, so daß kein heftiges Auftreffen auf den Anschlag in der Endstellung erfolgt.

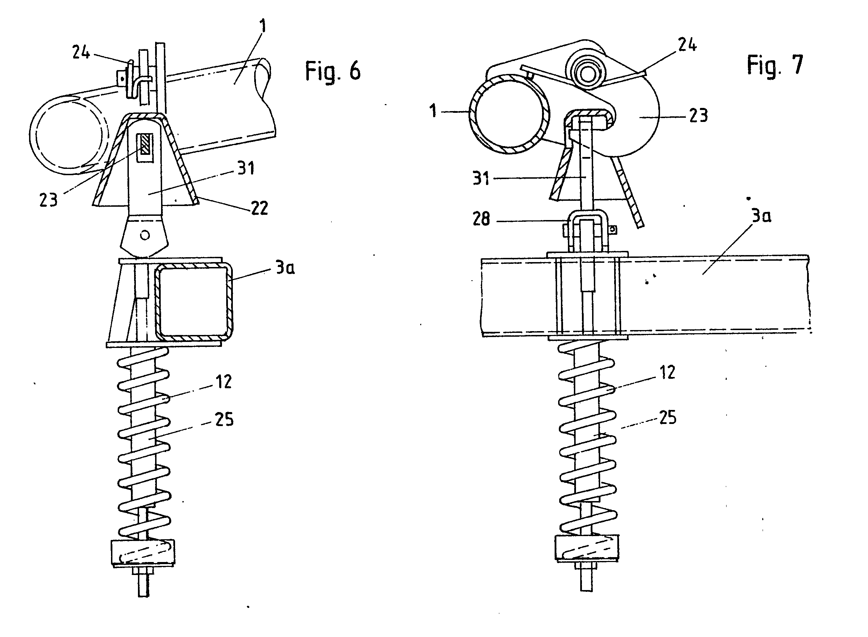

Die Fig. 6 und 7 zeigen ein weiteres Ausführungsbeispiel einer Verriegelungsanordnung, die hier senkrecht zum Tragbalken 3a angeordnet ist. Dieser konstruktive Aufbau ist einfacher, da eine Umlenkrolle und eine Kette entfällt. Im übrigen sind auch hier gleiche Teile mit gleichen Bezugszeichen versehen.

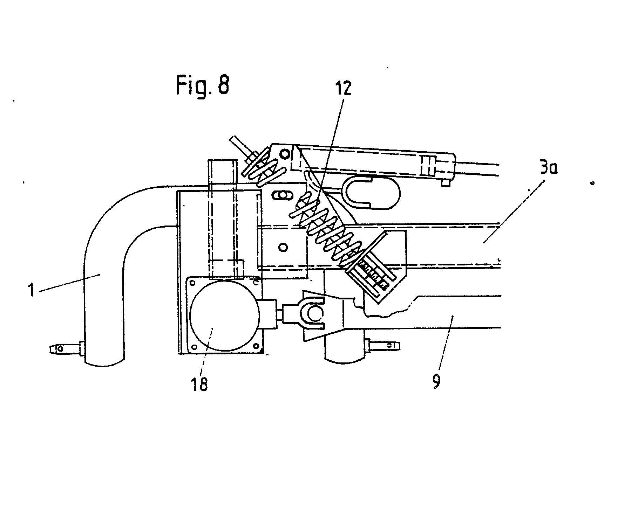

Die Fig. 8 zeigt ein weiteres erfindungsgemäßes Ausführungsbeispiel, bei dem die Verriegelungsanordnung unter einem Winkel zur Horizontalen des Tragbalkens 3a angeordnet ist. Die Ausführungsform ist besonders vorteilhaft für eine Mähmaschine, die zum Transport senkrecht nach oben geklappt wird.

Durch die federbelastete Verriegelungsvorrichtung der erfindungsgemäßen Mähmaschine wird die gesamte Maschine bei Normalbetrieb wesentlich geschont und gleichzeitig wird die Mähgeschwindigkeit erhöht, da die Maschine insbesondere kleine Hindernisse ohne Schwierigkeiten überwindet. Obendrein ist der Beschleunigungsstoß in Fahrtrichtung in jedem Rangiermanöver wesentlich gegenüber herkömmlichen Mähmaschinen gedämpft.

## Patentansprüche

1. Mähmaschine mit einem Mähwerkbalken (4), der mindestens ein rotierendes Mähwerkzeug (6) an seiner Unterseite trägt und mit einem verschwenkbar angeordneten Tragbalken (3), der in Fahrtrichtung der Mähmaschine gesehen und in ihrer Arbeitsstellung vor dem Mähwerkbalken (4) angeordnet ist und mit einer Verriegelungsvorrichtung, die eine Feder und einen durch diese Feder beaufschlagten Riegel aufweist, dadurch gekennzeichnet, daß der Tragbalken (3) oberhalb des Mähwerkbalkens (4) angeordnet ist, daß der Tragbalken ferner zum Verschwenken gelenkig an einem Anbaubock (1) zum Anschluß an einen Schlepper angeordnet ist, und daß am Anbaubock (1) eine Fangtasche (22) angeordnet ist, in die ein mit einem Federelement (12) verbundenes Rastglied (31) eingreift und dort von dem verschwenkbar am Anbaubock (1) befestigten Riegel (23) gehalten wird, der mittels eines Zugseils (29) betätigbar ist.

2. Mähmaschine nach Anspruch 1, dadurch gekennzeichnet, daß das Federelement (12) parallel zum Tragbalken (3) und an diesem angeordnet ist, daß die Fangtasche (22) auf der dem Federelement (12) gegenüberliegenden Seite des Tragbalkens (3) und senkrecht zur Längsachse des Tragbalkens am Anbaubock (1) angeordnet ist und daß das Federelement (12) über eine umgelenkte Kette (26) und das Rastglied (31) mit dem in die Fangtasche (22) eingreifenden Riegel (23) verbunden ist.

3. Mähmaschine nach Anspruch 1, dadurch gekennzeichnet, daß das Federelement (12) sich senkrecht zum Tragbalken (3) erstreckt und daß das von der Federkraft beaufschlagte Rastglied (31) der Verriegelungsvorrichtung den Tragbalken (3) senkrecht durchsetzt.

4. Mähmaschine nach Anspruch 1, dadurch gekennzeichnet, daß das Federelement (12) unter einem Winkel zur Horizontalen zum Tragbalken (3) angeordnet ist.

5. Mähmaschine nach Ansprüchen 1 bis 4, dadurch gekennzeichnet, daß die Fangtasche (22) zwei gegenüberliegende Öffnungen (30) aufweist.

## Claims

1. Mowing machine with a cutter bar (4) carrying at least one rotatable cutting tool (6) on its underside, and with a pivotably arranged supporting beam (3) which, as seen in the direction of travel of the mowing machine and in its working position, is arranged in front of the cutter bar (4), and with a locking device which has a spring and a bolt stressed by this spring, characterised in that the supporting beam (3) is arranged above the cutter bar (4), in that, furthermore, for pivoting, the supporting bar is articulated on a mounting frame (1) for connection to a tractor, and in that located on the mounting frame (1) is a catching pocket (22) into which an engagement member (31) connected to a spring element (12) penetrates and is retained there by the bolt (23) which is fastened pivotably to the mounting frame (1) and can be actuated by means of a pull cable (29).

2. Mowing machine according to Claim 1, characterised in that the spring element (12) is arranged parallel to the supporting beam (3) and on the latter, in that the catching pocket (22) is arranged on the mounting frame (1) on the side of the supporting beam (3) located opposite the spring element (12), perpendicularly to the longitudinal axis of the supporting beam, and in that the spring element (12) is connected via a guided chain (26) and the engagement member (31) to the bolt (23) penetrating into the catching pocket (22).

3. Mowing machine according to Claim 1, characterised in that the spring element (12) extends perpendicularly relative to the supporting beam (3), and in that the engagement member (31) subjected to the spring force and belonging to the locking device passes vertically through the supporting beam (3).

4. Mowing machine according to Claim 1, characterised in that the spring element (12) is arranged at an angle to the horizontal relative to the supporting beam (3).

5. Mowing machine according to Claim 1 to 4, characterised in that the catching pocket (22) has two orifices (30) located opposite one another.

## Revendications

1. Faucheuse possédant une barre de coupe (4), laquelle porte sur son côté inférieur au moins une lame de coupe tournante (6), et possédant une barre-support (3) disposée d'une manière pivotante, laquelle, dans sa position de travail, et quand on regarde dans le sens de marche de la faucheuse, est disposée en avant de la barre de coupe (4), et possédant un dispositif de verrouillage lequel présente un ressort et un verrou sur lequel agit ce ressort, caractérisée en ce que la barre-support (3) est disposée au-dessus de la barre de coupe (4), que la barre-support, pour pouvoir pivoter, est en outre liée d'une manière articulée à un support d'attelage (1) destiné au raccordement à un tracteur, et qu'est diposé contre le support d'attelage (1) un logement récepteur (22), dans lequel un organe à encliquetage (31), relié à un élément de ressort (12), s'encliquette et y est maintenu par le verrou (23), fixé au support d'attelage (1) d'une manière pivotante, verrou qui peut être manoeuvré par l'intermédiaire d'un câble de traction (23).

2. Faucheuse selon la revendication 1, caractérisée en ce que l'élément de ressort (12) est disposé parallèlement à la barre-support (3) et contre cette dernière, que le logement récepteur (22) est disposé sur le côté de la barre-support (3) opposé à l'élément de ressort (12), et contre le support d'attelage (1) perpendiculairement à l'axe longitudinal de la barre-support, et que l'élément de ressort (12) est relié, par l'intermédiaire d'une chaîne articulée (26) et de l'organe à encliquetage (31), avec un verrou (23) qui s'encliquette dans le logement récepteur (22).

3. Faucheuse selon la revendication 1, caractérisé en ce que l'élément de ressort (12) s'étend perpendiculairement à la barre-support (3), et que l'organe à encliquetage (31), sur lequel agit la force du ressort, du dispositif de verrouillage traverse perpendiculairement la barre-support (3).

4. Faucheuse selon la revendication 1, caractérisé en ce que l'élément de ressort (12) est disposé en faisant un certain angle par rapport à l'horizontale de la barre-support (3).

5. Faucheuse selon les revendications 1 à 4, caractérisée en ce que le logement récepteur (22) possède deux ouvertures opposées (30).

Fig. 1

Fig. 2

0 073 359

Fig. 3

Fig. 4

Fig. 5

0 073 359

Fig. 6

Fig. 7

Fig. 8